Europäisches Patentamt

European Patent Office

Office européen des brevets

(19)

(11) Numéro de publication: **0 055 152
B1**

(12)

# FASCICULE DE BREVET EUROPEEN

(45) Date de publication du fascicule du brevet:
**11.07.84**

(51) Int. Cl.³: **H 04 N 3/18**

(21) Numéro de dépôt: **81401846.1**

(22) Date de dépôt: **20.11.81**

(54) Circuit de balayage vertical, alimentation pour sa commande, et récepteur de télévision comportant un tel circuit.

(30) Priorité: **23.12.80 FR 8027321**

(43) Date de publication de la demande:
**30.06.82 Bulletin 82/26**

(45) Mention de la délivrance du brevet:
**11.07.84 Bulletin 84/28**

(84) Etats contractants désignés:
**DE GB IT NL SE**

(56) Documents cités:
**EP - A - 0 008 263
FR - A - 2 378 413**

(73) Titulaire: **SOCIETE D'ELECTRONIQUE DE LA REGION
PAYS DE LOIRE SEREL, 74, rue du Surmelin,
F-75020 Paris (FR)**

(72) Inventeur: **Potin, Michel, THOMSON-CSF SCPI 173, bld
Haussmann, F-75360 Paris Cedex 08 (FR)**
Inventeur: **Granger, Alain, THOMSON-CSF SCPI 173, bld
Haussmann, F-75360 Paris Cedex 08 (FR)**

(74) Mandataire: **Grynwald, Albert et al, THOMSON-CSF
SCPI 173, Bld Haussmann, F-75379 Paris Cedex 08 (FR)**

### Description

L'invention est relative à un circuit de balayage vertical en mode commuté pour un récepteur de télévision et à un récepteur de télévision comportant un tel circuit.

On sait qu'en télévision l'image est formée par un point lumineux se déplaçant selon des lignes, de gauche à droite et de haut en bas. Ce point est l'impact d'un pinceau d'électrons engendré par un canon à électrons contre une substance luminophore recouvrant l'écran; son intensité lumineuse est fonction de l'intensité du pinceau d'électrons. Le balayage de l'écran est obtenu par déviation de ce pinceau d'électrons par des champs magnétiques produits par deux bobines, appelées déviateurs, dont chacune est parcourue par un courant électrique qui varie, en fonction du temps, en dents de scie. Un déviateur est prévu pour assurer le balayage horizontal, c'est-à-dire le balayage des lignes et un déviateur est prévu pour le balayage vertical, ou balayage trame, pour passer chaque ligne à la suivante.

Dans le brevet européen N° 79 400 520.7 (EP-0 008 263) au nom de la demanderesse on a décrit un circuit de balayage vertical dans lequel l'énergie – le courant électrique – d'alimentation du déviateur est tirée exclusivement des impulsions de retour ligne, c'est-à-dire de la surtension aux bornes du déviateur horizontal lors de la variation brusque du courant à chaque retour de ligne dans ce déviateur. A cet effet, les impulsions de retour ligne sont recueillies aux bornes de l'enroulement secondaire d'un transformateur, appelé «transformateur ligne», alimentant un circuit de filtrage en série avec un interrupteur commandé; c'est le circuit de filtrage qui alimente le déviateur vertical en série avec un condensateur, appelé condensateur de liaison, et une résistance de mesure. Le condensateur de liaison est tel que la tension aux bornes de l'ensemble formé par le déviateur vertical, ce condensateur et la résistance de mesure garde un signe constant. A chaque période de balayage horizontal l'interrupteur est commandé de façon à être conducteur pendant un temps tel que le courant ainsi fourni par le circuit de filtrage soit fonction du numéro de la ligne correspondante afin que ce courant varie de la manière désirée, c'est-à-dire sensiblement en dents de scie à la fréquence de balayage vertical. La commande de l'interrupteur est assurée par un circuit de commande comprenant, d'une part, un générateur engendrant un signal de tension sensiblement en dents de scie représentant le courant désiré dans le déviateur vertical et, d'autre part, un convertisseur tension – temps pour convertir à chaque ligne le signal produit par ledit générateur en un temps de conduction de l'interrupteur. Cette commande est de préférence régulée, le circuit de commande comprenant une entrée de contre-réaction sur laquelle est appliquée la tension aux bornes de la résistance de mesure, représentant le courant circulant dans le déviateur vertical, de manière que ce courant soit l'image la plus fidèle possible du signal produit par le générateur.

Le circuit de commande nécessite, pour son fonctionnement, une tension continue qui, jusqu'à présent, à été produite par une alimentation auxiliaire.

L'invention vise à s'affranchir d'une telle alimentation auxiliaire.

Le circuit de balayage vertical selon l'invention, qui est du type en mode commuté, comprend une alimentation continue pour le circuit de commande assurant la variation désirée dans le déviateur vertical et il est caractérisé en ce que cette alimentation continue tire son énergie de la composante continue du courant circulant dans le déviateur vertical. De cette manière, l'énergie fournie par les impulsions de retour ligne sert non seulement à produire le courant dans le déviateur vertical mais également à alimenter le circuit de commande de l'interrupteur dans le circuit de filtrage alimentant ce déviateur. La réalisation des circuits du téléviseur en est donc simplifiée. La tension continue fournie au circuit de commande est en général d'une qualité suffisante pour assurer un fonctionnement correct de ce circuit notamment grâce au filtrage réalisé par le condensateur de liaison.

Dans le mode de réalisation préféré l'alimentation est régulée, par exemple à l'aide d'une diode ZENER.

D'autre caractéristiques de l'invention apparaîtront avec la description de certains de ses modes de réalisations, celle-ci étant effectuée en se référant aux dessins ci-annexés sur lesquels:

– la figure 1 représente un circuit de balayage vertical selon l'invention,

– la figure 2 représente une partie du circuit de la figure 1 pour une variante, et

– la figure 3 est analogue à la figure 2 mais pour une autre variante.

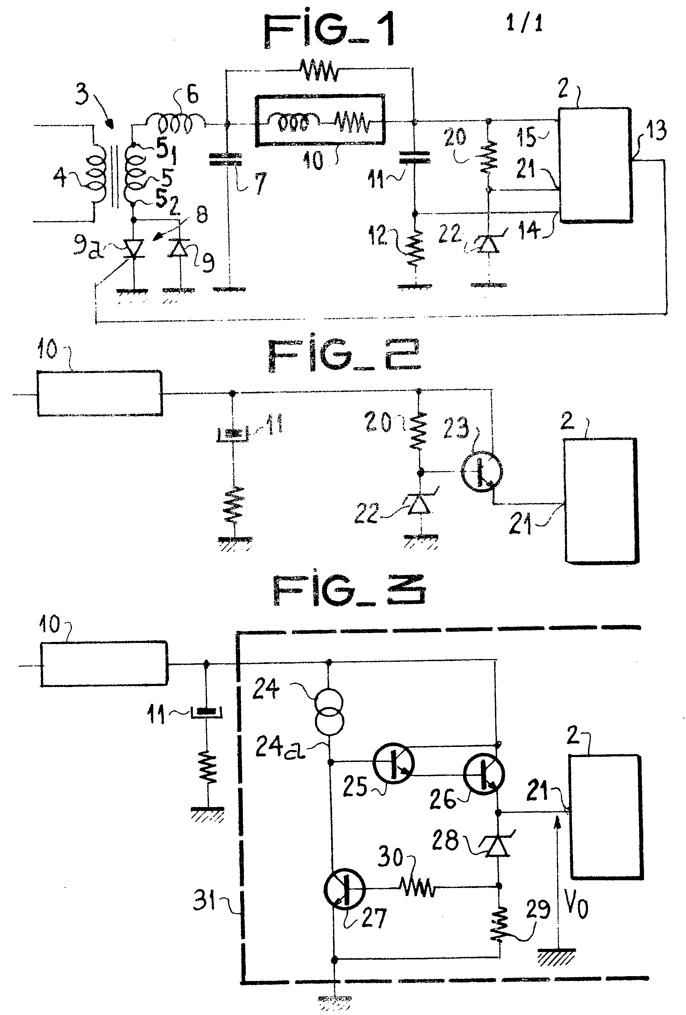

La figure 1 représente un circuit de balayage vertical du type de celui décrit dans le brevet européen n° 79 400 520.7 mentionné ci-dessus mais qui comprend, en plus, une alimentation selon l'invention.

Ce circuit de balayage vertical présente un transformateur ligne 3 dont l'enroulement primaire 4 reçoit les impulsions de retour ligne et dont l'enroulement secondaire 5 alimente un circuit à inductance 6 et condensateur 7. L'inductance 6 est reliée à une borne $5_1$ de l'enroulement 5 et le condensateur est connecté, d'un côté, à la borne de l'inductance 6 opposée à l'enroulement 5, et de l'autre côté, à la masse. La seconde borne $5_2$ du secondaire 5 est reliée à la masse par l'intermédiaire d'un interrupteur 8 comprenant, d'une part, une diode 9 dont l'anode est à la masse et, d'autre part, un thyristor $9_a$, monté en parallèle mais en sens inverse, c'est-à-dire avec sa cathode à la masse.

Aux bornes du condensateur 7 est branché l'ensemble en série du déviateur vertical 10, d'un condensateur de liaison 11 et d'une résistance de mesure 12.

La capacité du condensateur 11 est suffisamment élevée pour que la polarité de la tension aux bornes de l'ensemble déviateur 10, condensateur 11 et résistance 12 soit toujours la même.

Le circuit de commande 2 de l'interrupteur 8 comprend un générateur de signaux sensiblement en dents de scie à la fréquence de balayage vertical et un convertisseur tension-temps pour convertir les signaux produits par cet oscillateur en un temps de conduction du thyristor $9_a$ à chaque période de balayage horizontal. La sortie 13 du circuit 2 est donc reliée à la gâchette du thyristor $9_a$.

Le circuit 2 présente une entrée 14 de contre-réaction sur laquelle est appliquée la tension aux bornes de la résistance 12, représentant le courant traversant le déviateur 10, de façon à assurer une régulation dudit courant. Ce circuit 2 présente une autre entrée 15 de contre-réaction sur laquelle est appliquée la tension aux bornes du condensateur 11 de manière à réguler la valeur moyenne de cette tension, également comme décrit dans le brevet 79 400 520.7.

Selon l'invention le circuit de commande 2 tire son énergie d'alimentation de la composante continue du courant traversant le déviateur vertical 10. En effet, ce déviateur est traversé par un courant sensiblement en dents de scie superposé à un courant continu permettant le cadrage correct de l'image sur l'écran du téléviseur. On a constaté que ce courant avait une intensité suffisante, de l'ordre de 10 mA, pour alimenter le circuit de commande 2.

Dans l'exemple de la figure 1 à la borne commune au déviateur 10 et au condensateur 11 est reliée une résistance 20 dont l'autre borne est connectée, d'une part, à l'entrée d'alimentation 21 du circuit 2 et d'autre part, à la masse par l'intermédiaire d'une diode ZENER 22 permettant d'appliquer sur l'entrée 21 une tension de valeur déterminée, fonction de la tension ZENER de cette diode 11.

Dans ce montage le condensateur 11 filtre la composante périodique. Ce filtrage est d'une qualité suffisante pour que l'entrelacement des lignes des deux trames d'une image ne soit pas perturbé.

Dans l'exemple représenté sur la figure 2, la borne commune à la résistance 20 et à la diode ZENER 22 est reliée à la base d'un transistor 23 de type NPN dont le collecteur est connecté à la borne commune à la résistance 20 et au condensateur 11 et dont l'émetteur est relié à l'entrée d'alimentation 21 du circuit 2. Le transistor 23 permet de fournir un courant d'intensité importante au circuit 2 sans faire varier l'intensité du courant dans la diode ZENER 22. La tension de sortie est constante à condition que le courant traversant la diode 22 garde une intensité constante.

Dans l'exemple de la figure 3 la borne commune au condensateur 11 et au déviateur 10 est reliée à un générateur de courant 24 ainsi qu'aux collecteurs de transistors 25 et 26, tous deux de type NPN. La sortie 24a du générateur de courant 24 est reliée à la base du transistor 25 ainsi qu'au collecteur d'un transistor 27, également de type NPN, dont l'émetteur est à la masse.

L'émetteur du transistor 26 est relié à la cathode d'une diode ZENER 28 dont l'anode est connectée à la masse par l'intermédiaire d'une résistance 29 ainsi qu'à la base du transistor 27 par l'intermédiaire d'une autre résistance 30 de faible valeur par rapport à la valeur de la résistance 29. L'émetteur du transistor 26 est relié à l'entrée d'alimentation 21 du circuit de commande 2.

L'ensemble à générateur de courant 24, transistors 25, 26 et 27, diode 28 et résistances 29 et 30 constitue un régulateur de tension, c'est-à-dire qu'il permet de maintenir constante la tension $V_0$ à l'entrée 21 du circuit 2. En effet si l'intensité $I_0$ du courant sortant de ce montage, c'est-à-dire aboutissant à la borne 21, augmente l'intensité du courant traversant la diode ZENER 28 diminue, ce qui entraine une diminution de la tension base émetteur du transistor 27 qui est pratiquement égale à la tension aux bornes de la résistance 29. La diminution de la tension-base émetteur du transistor 27 entraine une diminution de l'intensité du courant parvenant à son collecteur. Il en résulte une augmentation de l'intensité du courant fourni à la base du transistor 25, l'intensité du courant délivré par le générateur 24 étant constante. Dans ces conditions le courant fourni par l'émetteur du transistor 26 augmente d'intensité, ce qui permet de compenser la diminution de l'intensité du courant fourni à la diode ZENER 28 et la diminution de la tension aux bornes de la résistance 29. Il en résulte que la tension $V_0$ est maintenue constante car elle dépend de l'intensité $I_Z$ du courant traversant la diode ZENER, de la tension ZENER et de la tension aux bornes de la résistance 29.

La réalisation représentée sur la figure 3 se prête particulièrement bien à la fabrication sous forme d'un circuit intégré 31 qui comprend le circuit 2 en plus du régulateur de tension.

Quelque soit le mode de réalisation, la tension d'alimentation obtenue à partir de la composante continue du courant de balayage vertical, sans autre filtrage que celui résultant de la présence du condensateur 11, est d'une qualité très satisfaisante pour le circuit de commande 2.

L'invention est particulièrement utile pour les récepteurs de télévision en couleur transistorisés du type portable avec une alimentation autonome, telle qu'une batterie d'accumulateurs.

Elle s'applique à tout type de circuit de balayage vertical pour récepteur de télévision ou analogue.

**Revendications**

1. Circuit de balayage vertical en mode commuté pour récepteur de télévision, comprenant une alimentation continue pour le circuit de commande (2) assurant la variation désirée dans le déviateur vertical (10), caractérisé en ce que ladite alimentation continue (20, 22) tire son énergie de la composante continue du courant circulant dans le déviateur vertical (10).

2. Circuit selon la revendication 1, caractérisé en ce que le déviateur vertical (10) étant en série avec un condensateur (11), l'alimentation continue est constituée par une dérivation (20, 22) en parallèle sur ledit condensateur (11).

3. Circuit selon la revendication 2, caractérisé en ce que l'énergie nécessaire pour engendrer le courant de balayage est exclusivement tirée des impulsions de retour ligne et la tension aux bornes de l'ensemble comprenant le déviateur et le condensateur garde un signe constant.

4. Circuit selon la revendication 3, caractérisé en ce que le circuit de commande (2) comporte un générateur de signaux sensiblement en dents de scie variant comme le courant désiré dans le déviateur vertical (10) et un convertisseur pour transformer, à chaque période de balayage horizontal, les signaux produits par ce générateur en un temps de conduction d'un interrupteur (8) se trouvant dans un circuit de filtrage des impulsions de retour ligne.

5. Circuit selon l'une quelconque des revendications 2 à 4, caractérisé en ce que la dérivation comporte une résistance (20).

6. Circuit selon l'une quelconque des revendications 2 à 4, caractérisé en ce que la dérivation fait partie d'un circuit intégré (31).

7. Circuit selon l'une quelconque des revendications précédentes caractérisé en ce que la tension continue d'alimentation est stabilisée.

8. Circuit selon la revendication 7, caractérisé en ce que, pour la stabilisation, il comporte une diode ZENER (22).

9. Récepteur de télévision caractérisé en ce qu'il comprend un circuit de balayage selon l'une quelconque des revendications précédentes.

**Patentansprüche:**

1. Vertikalablenkkreis im geschalteten Modus für einen Fernsehempfänger, mit einer Gleichstromversorgung für den Steuerschaltkreis (2), der die für die Vertikalablenkeinheit (10) gewünschte Variation bewirkt, dadurch gekennzeichnet, dass die Gleichstromversorgung (20, 22) ihre Energie von der Gleichkomponente des in der Vertikalablenkeinheit (10) fliessenden Stroms erhält.

2. Kreis nach Anspruch 1, dadurch gekennzeichnet, dass die Vertikalablenkeinheit (10) in Reihe mit einem Kondensator (11) angeordnet ist und dass die Gleichstromversorgung von einer Ableitung (20, 22) gebildet wird, die zu diesem Kondensator (11) parallel liegt.

3. Kreis nach Anspruch 2, dadurch gekennzeichnet, dass die für die Erzeugung des Ablenkstroms nötige Energie ausschliesslich aus den Zeilenrücklaufimpulsen entnommen wird und dass die Spannung an der die Ablenkeinheit und den Kondensator enthaltenden Baugruppe konstantes Vorzeichen behält.

4. Kreis nach Anspruch 3, dadurch gekennzeichnet, dass der Steuerschaltkreis (2) einen Generator für i.w. sägezahnförmige Impulse, die wie der in der Vertikalablenkeinheit (10) gewünschte Strom variieren, und einen Wandler aufweist, der in jeder Horizontalablenkperiode die von diesem Generator erzeugten Impulse in eine Leitdauer eines Unterbrechers (8) umwandelt, der sich in einem Filterschaltkreis für die Zeilenrücklaufimpulse befindet.

5. Kreis nach einem beliebigen der Ansprüche 2 bis 4, dadurch gekennzeichnet, dass die Ableitung einen Widerstand (20) aufweist.

6. Kreis nach einem beliebigen der Ansprüche 2 bis 4, dadurch gekennzeichnet, dass die Ableitung Teil eines integrierten Schaltkreises (31) ist.

7. Kreis nach einem beliebigen der vorhergehenden Ansprüche, dadurch gekennzeichnet, dass die Versorgungsgleichspannung stabilisiert ist.

8. Kreis nach Anspruch 7, dadurch gekennzeichnet, dass er für die Stabilisierung eine Zenerdiode (22) aufweist.

9. Fernsehempfänger, dadurch gekennzeichnet, dass er einen Ablenkkreis nach einem beliebigen der vorhergehenden Ansprüche aufweist.

**Claims**

1. A vertical scan circuit in the switched mode used for a TV receiver, comprising a DC supply circuit for the control circuit (2) which ensures the desired variation in the vertical scan unit (10), characterized in that said supply circuit (20, 22) is fed by the DC component of the current which flows in the vertical scan unit (10).

2. A circuit according to claim 1, characterized in that, the vertical scan unit (10) being connected in series with a capacitor, the DC supply circuit is constituted by a branch (20, 22) which is connected in parallel to said capacitor (11).

3. A circuit according to claim 2, characterized in that the energy which is necessary for generating the scan current is exclusively withdrawn from the line-return pulses and that the voltage at the terminals of the assembly comprising the scan unit and the capacitor, maintains its sign constant.

4. A circuit according to claim 3, characterized in that the control circuit (2) comprises a generator producing signals of approximately saw tooth shape, these signals varying according to the current which is desired in the vertical scan unit (10), and a converter which, in each horizontal scan period, transforms the signals produced by that generator into a conducting duration of an interrupter (8) which is situated in a circuit for filtering the line-return pulses.

5. A circuit according to any one of the claims 2 to 4, characterized in that the parallel branch comprises a resistor (20).

6. A circuit according to any one of the claims 2 to 4, characterized in that the parallel branch is part of an integrated circuit (31).

7. A circuit according to any one of the preceding claims, characterized in that the DC supply voltage is stabilized.

8. A circuit according to claim 7, characterized in that in view of the stabilization it comprises a Zener diode (22).

9. TV receiver, characterized in that it comprises a scan circuit according to any one of the preceding claims.

## FIG_1

1/1

## FIG_2

## FIG_3